(19) Europäisches Patentamt
European Patent Office
Office européen des brevets

(11) **EP 3 516 588 B1**

(12) **FASCICULE DE BREVET EUROPEEN**

(45) Date de publication et mention
de la délivrance du brevet:
**17.03.2021 Bulletin 2021/11**

(21) Numéro de dépôt: **17777544.2**

(22) Date de dépôt: **22.09.2017**

(51) Int Cl.:
***G06K 19/07*** *(2006.01)*      ***G06K 19/077*** *(2006.01)*
***H01Q 1/04*** *(2006.01)*

(86) Numéro de dépôt international:
**PCT/EP2017/074142**

(87) Numéro de publication internationale:
**WO 2018/055141 (29.03.2018 Gazette 2018/13)**

(54) **CAPTEUR D'IDENTIFICATION POUR OUVRAGES ENFOUIS À GRANDE PROFONDEUR**

IDENTIFIZIERUNGSSENSOR FÜR IN GROSSER TIEFE VERGRABENE ARBEITEN

IDENTIFICATION SENSOR FOR WORKS BURIED AT GREAT DEPTH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.09.2016 FR 1601392**

(43) Date de publication de la demande:
**31.07.2019 Bulletin 2019/31**

(73) Titulaire: **ELYDAN**
**38590 Saint-Étienne-de-Saint-Geoirs (FR)**

(72) Inventeurs:
• **LE BASTARD, Ludovic**
**38120 Saint-Egrève (FR)**
• **NIVON, Thierry**
**26750 Chatillon St Jean (FR)**
• **PALOMARES, Marc**
**38000 Grenoble (FR)**

(74) Mandataire: **Schuffenecker, Thierry**
**120 Chemin de la Maure**
**06800 Cagnes sur Mer (FR)**

(56) Documents cités:
**WO-A1-2011/157941      WO-A1-2011/157942
US-A1- 2003 231 020**

## Description

## Domaine technique de l'invention

La présente invention concerne le domaine des capteurs d'identification RFID à destination d'ouvrages enfouis, et notamment un capteur d'identification RFID adapté aux grandes profondeurs.

## Etat de la technique

La multiplication des réseaux permettant notamment la distribution de l'eau, du gaz, de l'électricité, des télécommunications est devenue évidente aujourd'hui. Les contraintes de sécurité, réglementaires ou législatives imposent de pouvoir situer précisément ces ouvrages enterrés. L'intérêt de procéder à une détection et/ou une identification de ces éléments est évident et des premières techniques ont été mises au point pour permettre une détection/identification de type RFID (ou *Radio Frequency Identification* dans la littérature anglo-saxonne) des ouvrages enfouis.

La demande de brevet internationale WO 2011157941 déposée le 14 Juin 2011 par le COMMISSARIAT A L'ENERGIE ATOMATIQUE ET AUX ENERGIES ALTERNATIVES, a pour objet une antenne pour milieu humide pouvant servir à la réalisation d'un détecteur/transpondeur RFID pour un ouvrage enfoui. L'enseignement de cette demande est une première avancée significative vis à vis la problématique de la tolérance vis-à-vis du milieu externe.

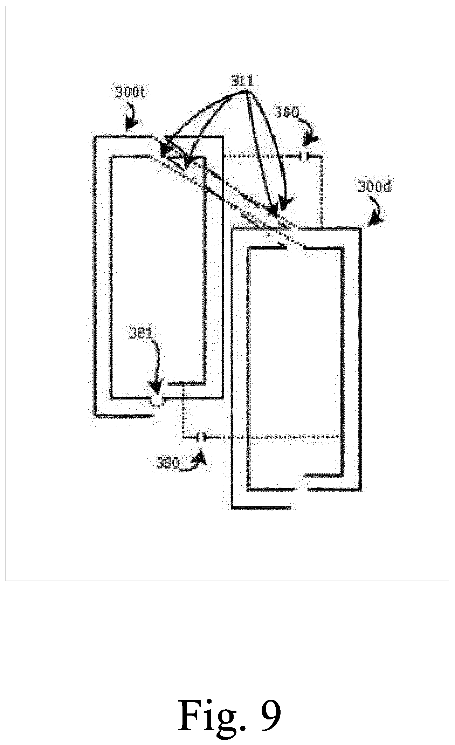

Le fonctionnement de cette antenne connue est illustrée dans la figure 9: un ensemble de spires (300t, 300d) est imprimé sur un substrat mince. Les spires du dessus (300t) sont en vis-à-vis des spires du dessous (300d). L'agencement réalisé entraine une capacité répartie (380) conséquente, due à la faible distance des spires en vis-à-vis. C'est cette capacité qui sert de capacité d'accord pour l'antenne, tandis que les segments d'antennes (300t, 300d) forment l'inductance. La mise en œuvre de boucles de Moebius et la capacité répartie (380) permettent une relative immunité face aux variations dues au milieu extérieur.

Toutefois le procédé reste très sensible au procédé de fabrication. En effet la capacité répartie est fonction de trois paramètres directs : la largeur de chaque segment (300t) et (300d), l'épaisseur du substrat entre chaque segment (300t) et (300d), et l'alignement de ces segments entre eux. Enfin un quatrième paramètre, indirect, est la valeur de la permittivité dudit substrat, qui peut varier en fonction du taux d'humidité et de la température.

Ensuite au niveau coût de revient, le procédé mis en œuvre entraine la présence obligatoire d'un substrat, qui devra être imprimé avec des pistes métalliques en double face.

De son côté, la société demanderesse de la présente demande de brevet a déposé une demande de brevet WO 2012/062471 ayant pour objet un tube polymère équipé d'un capteur d'identification ou étiquette RFID.

D'une manière générale, il convient de rappeler que la technologie de communication sans fil et d'identification sans contact, désignée sous l'appellation RFID, se rapporte plus particulièrement au domaine HF de la technologie (13.56 MHz dans notre exemple) pour laquelle la communication se fait essentiellement par champ magnétique. Dans cette gamme de fréquence les distances de lecture sont généralement inférieures à 1 mètre. Le système se compose alors d'un émetteur (principe actif, générateur de puissance) et d'un transpondeur (principe passif, télé alimenté)

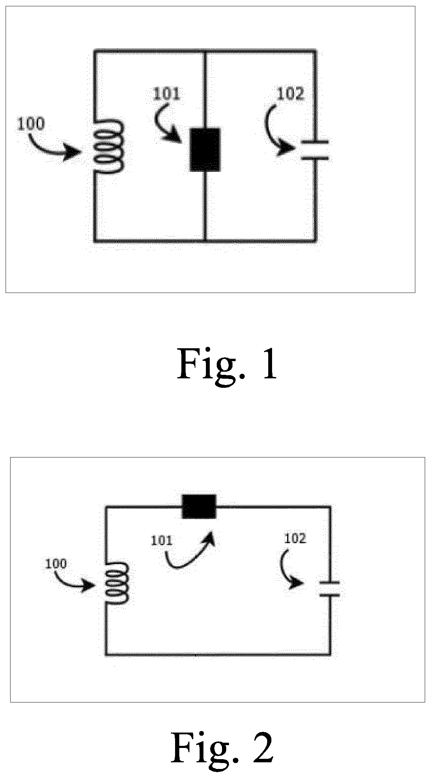

Comme cela est illustré respectivement dans les figures 1 et 2, un transpondeur RFID comporte classiquement la connexion en série (fig1), ou en parallèle (fig2), d'au moins 3 éléments qui sont une antenne (100), d'une puce RFID (101), et d'un condensateur (102).

L'antenne (100) est constituée d'une ou plusieurs spires permettant de collecter une partie de la puissance d'émission électromagnétique d'un émetteur RFID situé sur le sol. A cet égard, l'antenne dispose d'une surface minimale permettant l'activation de la puce RFID. En pratique, cette surface correspond à la captation d'une puissance minimum en relation avec la puissance maximum d'émission du lecteur, la distance de détection et les besoins en puissance de la puce RFID. Le nombre de spire sera en relation avec la tension minimale d'activation de la puce RFID.

L'antenne présente une inductance désignée $L_{ant}$. Cette valeur d'inductance est une fonction de la géométrie de l'antenne. A titre d'exemple, une approximation pour une antenne circulaire composée de N spires jointives ou superposées, d'un rayon R et d'un diamètre de conducteur a est la suivante :

$$L = \mu_0 * R * N^2 * \left( \ln \left( \frac{8*R}{a} \right) - 2 \right) \text{ avec } \mu_0 = 4\pi *$$

$10^{-7}$ et ln étant l'opérateur Logarithme népérien.

La puce RFID peut être assimilée à un condensateur notée $C_{tag}$. Une valeur donnée à titre d'exemple est de l'ordre de 20 pF ($20*10^{-12}$ F)

L'ensemble doit résonner à une fréquence proche de la fréquence du signal, et comme cela est connu d'un homme du métier, l'équation qui donne la fréquence de résonance est : $f_0 = \frac{1}{2\pi\sqrt{L_{ant}*C_{acc}}}$ avec $C_{acc} = C_{102} +$ $C_{tag}$ pour la figure 1 (cas parallèle) ou

$$C_{acc} = \frac{C_{102}*C_{tag}}{C_{102}+C_{tag}} \text{ pour la figure 2 (cas série). } C_{acc}$$

représente la capacité d'accord du système résonnant.

Si $L_{ant}$ est imposé par la géométrie de l'antenne, $f_0$ est imposé par le système, il ne reste plus comme variable d'ajustement que $C_{acc}$. Cette valeur nous est donnée par la relation bien connue :

$$C_{acc} = \frac{1}{4\pi^2 * f_0^2 * L_{ant}}$$

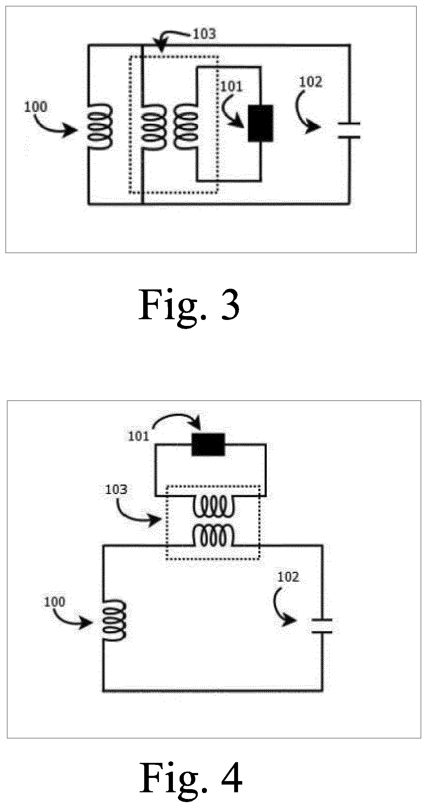

D'autres techniques peuvent être réalisées, comme dans les figures 3 et 4, où l'on voit à présent que la puce RFID 101 est isolée du circuit résonant au moyen d'un coupleur 103.

Par ailleurs, il est à noter que, pour atténuer les effets des dérives en fréquences (dérives des valeurs de composants liées à la température ou à la dispersion due à la tolérance, ou encore aux milieux dans lesquels sont disposés les transpondeurs), les conceptions classiques imposent un facteur qualité relativement bas (généralement de l'ordre de 30 à 40). Or, plus la surface d'antenne et/ou le nombre de spires augmente, plus $L_{ant}$ augmente, le facteur qualité étant proportionnel à $L_{ant}$ celui-ci augmente donc, jusqu'à devenir problématique.

**Exposé de la nouvelle problématique rencontrée liée à l'industrialisation de masse des étiquettes RFID.**

Comme cela a été mentionné précédemment, la mise en œuvre d'une étiquette RFID destinée à un ouvrage enfoui imposait de pouvoir disposer d'une étiquette RFID insensible au milieu humide, ce qui fut grandement résolu par la demande de brevet WO 2011157941 précitée.

En revanche, une nouvelle problématique apparait cruciale pour l'industriel qui envisage la réalisation en masse d'étiquettes RFID pour ouvrages enfouis. En effet, lorsque $L_{ant}$ augmente (Augmentation de la surface ou augmentation du nombre de spires) l'on constate que $C_{acc}$ doit diminuer pour pouvoir garder le circuit résonnant à $f_0$. Si pour une réalisation donnée l'on obtient $L_{ant}$ = 11 $\mu H$ (11 * 10$^{-6}$ $H$), avec par exemple $f_0$ = 13.56 $MHz$ (13.56 * 10$^6$ $Hz$), alors $C_{acc}$ = 12.52 $pF$.

L'on constate alors qu'il est pratiquement impossible de réaliser un circuit avec mise en parallèle des constituants, comme cela est illustré dans la figure 1. Il ne reste donc que la mise en série illustrée en figure 2, ce qui impose, avec des formules bien connues d'un homme du métier, $C_{102}$ = 33.5 $pF$, mais ce faisant, et toujours par des formules bien connues, nous imposons un pont diviseur de tension formé par $C_{tag}$,$C_{102}$. Ce qui dans notre exemple introduit une chute de tension au borne de 101 de l'ordre d'un tiers, diminuant alors la capacité de détection du transpondeur.

L'utilisation du procédé de couplage illustré en figures 3 et 4, proposé par exemple dans le brevet US 2009/0027208 déposé le 5 juillet 2006 par TAGSYS, pourrait améliorer la situation mais s'avère relativement couteuse pour une industrialisation de masse, soit du point de vu composant (1 composant coupleur supplémentaire) soit du point de vue fabrication pour le positionnement d'une puce pré équipée d'un élément de couplage. De plus le rendement global du transpondeur est diminué de par la présence du coupleur, dû au rendement intrinsèque de celui-ci.

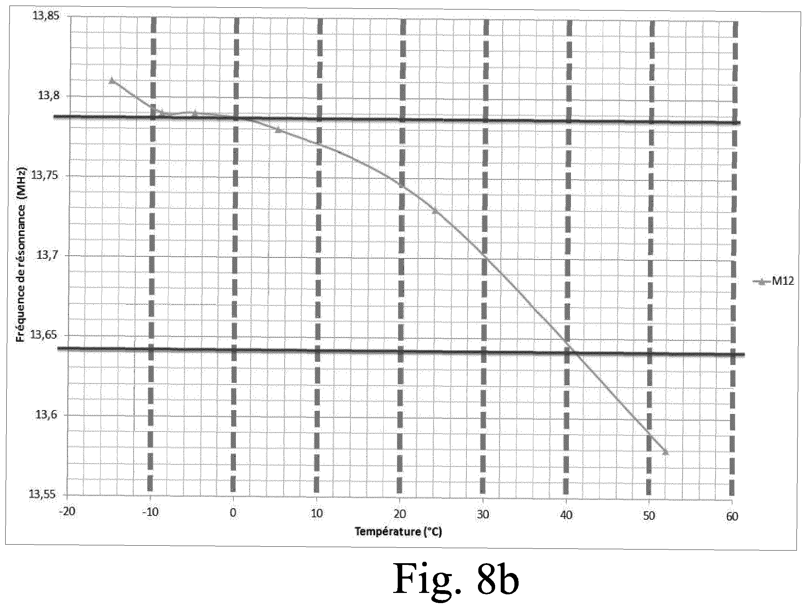

Par ailleurs, il a été constaté qu'aucune des solutions connues, et notamment la solution précitée décrite dans la demande de brevet WO 2011157941 précitée ne permet de garantir une bonne tolérance sur la fréquence d'accord. L'on constate que cette fréquence $f_0$ va dépendre de 3 paramètres directs distincts : le procédé de réalisation des spires (100, 200x) (influence sur la valeur de l'inductance), la tolérance sur les capacités d'accord (102, 202x), et enfin les tolérances sur les capacités parasites (280x, capacité de 201). Un 4$^{ème}$ facteur, lui indirect, est la température de fonctionnement, qui va introduire une dérive des différentes valeurs (essentiellement les capacités) par rapport à une température nominale (typiquement 25 °C)
Pour les variations dues aux températures, des mesures ont été relevées, et sont illustrées dans la figure 8b, et l'on observe que le décalage en fréquence est de l'ordre de 140 kHz sur la plage 0 - 40 °C.

Si l'on tient compte des tolérances sur les valeurs de composant, par exemple une variation de 2% sur la valeur nominale de la capacité d'accord entraine une variation de 130 kHz sur la fréquence de résonance.

En conclusion, sans tenir compte d'autres influences (dues au milieu notamment) nous avons un minimum de 270 kHz de variation possible sur la fréquence de résonance.

WO 2011/157942 décrit une antenne haute fréquence formée d'au moins deux paires de segments (32, 34) aboutés géométriquement, chacune comprenant un premier (322, 342) et un second (324, 344) conducteurs parallèles isolés l'un de l'autre, chaque paire comportant, à chaque extrémité, une seule borne pour la connexion électrique de son premier conducteur à celui de la paire voisine, dans laquelle lesdites paires sont d'un premier type (3), dans laquelle les conducteurs sont interrompus approximativement à leur point médian de manière à définir les deux segments, le premier (respectivement second) conducteur d'un segment étant relié au second (respectivement premier) conducteur de l'autre segment de la paire, ou d'un second type. Le premier conducteur est interrompu approximativement au point milieu afin de définir les deux segments, le deuxième conducteur n'étant pas interrompu.

US2003/0231020 décrit un élément de détection de corps enterré dans le sol avec un corps tel qu'un corps en métal et qui comprend un élément magnétique servant de noyau magnétique, une bobine d'antenne enroulée autour de l'élément magnétique et un condensateur connecté aux deux extrémités de la bobine d'antenne pour former un circuit de résonance avec la bobine d'antenne. La bobine d'antenne est montée sur le corps d'un seul tenant avec celui-ci par l'intermédiaire d'un élément de blindage électromagnétique dont la surface périphérique externe fait face à la surface externe du corps. Un élément de détection de corps comprend un circuit RFID connecté à la bobine d'antenne et monté intégralement sur un corps de sorte que la surface périphérique externe de la bobine d'antenne se trouve en face de la surface externe du corps par l'intermédiaire d'un élément de blindage électromagnétique.

## Exposé de l'invention

La présente invention a pour but de proposer un dispositif de détection d'une puce RFID enfoui à grande profondeur - jusqu'à au moins trois mètres - permettant une détection et une identification d'un ouvrage enfoui.

Un autre but de la présente invention consiste à proposer un dispositif de détection d'une puce RFID, ou transpondeur, pouvant présenter un facteur de qualité élevé (de l'ordre de 100) tout en autorisation une grande bande de tolérance sur la fréquence de résonance, par exemple approchant 400 kHz de dérive.

C'est un troisième but de la présente invention que de fournir un transpondeur à faible coût de fabrication et apportant une meilleure efficacité énergétique par rapport aux réalisations existantes.

C'est un quatrième but de la présente invention de réaliser un transpondeur pour une étiquette RFID adaptée à un ouvrage destiné à être enfoui, comportant l'ensemble des composants assurant la réception du signal, la réémission d'un signal réponse, l'accord en fréquence, et le traitement du signal au niveau de la puce RFID, tout en autorisant un minimum de 270 kHz de variation possible sur la fréquence de résonance.

C'est un cinquième but de la présente invention que d'améliorer le processus de fabrication d'une étiquette RFID, dans le sens où, en permettant une tolérance plus grande sur la fréquence d'accord, on aboutit à une réalisation autorisant une plus grande souplesse, tant sur les composants (valeur nominale des composants, ...) que sur l'implémentation des conducteurs (disposition, nature des isolants, ...), mais aussi dans la plage des conditions climatiques autorisées puisque l'étiquette RFID doit rester fonctionnelle dans la plage de température 0 - 40 °C .

L'invention réalise ces buts au moyen d'un transpondeur selon les revendications 1 à 11.

Dans un mode de réalisation particulier, les segments d'antenne sont disposés dans un même plan, de manière concentrique, et électriquement connectés au connecteur , dans lequel deux segments d'antenne immédiatement voisins sont disposés à une distance inférieure à 3 mm, et de préférence 1mm permettant l'apparition de capacités de couplage susceptible d'élargir la bande de tolérance sur la fréquence de résonance RFID.

Dans un autre mode de réalisation particulier, les segments d'antenne présentent des plans superposés les uns sur les autres, dans lequel deux segment d'antenne immédiatement voisins sont situés à une distance inférieure à 3 mm et de préférence inférieure à 1 mm permettant l'apparition de capacités de couplage susceptible d'élargir la bande de tolérance sur la fréquence de résonance RFID.

De préférence, les segments d'antenne sont disposés entre eux pour former une torsade permettant l'apparition de capacités de couplage susceptible d'élargir la bande de tolérance sur la fréquence de résonance RFID.

De préférence, les segments d'antenne sont groupés par deux ou par trois au sein d'un même câble conducteur à deux ou trois conducteurs, dans le but de faire apparaitre une capacité linéique entre chacun des segments d'antenne d'une valeur comprise entre 50 et 75 pF/m.

De ce fait, il n'est plus nécessaire, comme cela était le cas avec la solution préconisée dans la demande de brevet WO 2011157941 précité de faire appel à un substrat explicite pour réaliser les éléments d'antenne, la capacité répartie apparaissant entre les segments d'antenne ne jouant qu'un rôle relatif dans l'accord final de l'antenne, qui est déterminé par les capacités en série. Par ailleurs, il n'est plus nécessaire de prévoir une symétrie et le processus de fabrication de l'étiquette est réduit à une simplicité la plus avantageuse, avec un coût de fabrication minime.

## Description des dessins

D'autres caractéristiques, but et avantages de l'invention apparaîtront à la lecture de la description et des dessins ci-après, donnés uniquement à titre d'exemples non limitatifs. Sur les dessins annexés :

La figure 1 illustre la structure classique d'un transpondeur RFID basée sur la connexion en parallèle d'une antenne, d'une puce RFID et d'un condensateur.

La figure 2 illustre la structure classique d'un transpondeur RFID basée sur la connexion en série d'une antenne, d'une puce RFID et d'un condensateur.

Les figures 3 et 4 illustrent deux variantes d'une architecture connue d'un transpondeur RFID comportant un coupleur 103 permettant la connexion de la puce RFID à l'élément résonnant.

La figure 5 illustre le schéma électrique d'un mode de réalisation d'un transpondeur RFID comportant une puce RFID et une pluralité d'éléments d'antenne.

La figure 6a présente un mode de réalisation d'une première topologie de segments d'antennes organisée de manière concentrique.

La figure 6b présente un mode de réalisation d'une seconde topologie consistant en une superposition dans l'axe perpendiculaire à la surface des différents segments antennes.

La figure 6c présente un mode de réalisation d'une troisième topologie consistant à torsader les différents segments d'antennes entre eux pour former une torsade

La figure 7a illustre un premier mode de réalisation d'un circuit imprimé comportant deux éléments d'antenne se composant de trois segments d'antenne.

La figure 7b illustre un second mode de réalisation d'un circuit imprimé comportant également deux éléments d'antenne se composant de six segments d'antenne .

La figure 7c illustre le raccordement du premier mode de réalisation du connecteur de la figure 7a dans lequel les trois segments d'antennes sont réalisés au moyen d'un unique câble tri-conducteur.

La figure 7d illustre le raccordement du second mode de réalisation du connecteur de la figure 7b dans lequel les six segments d'antennes sont réalisés au moyen de câbles tri-conducteur.

Les figures 8a, 8c, 8d représentent la tolérance sur la fréquence d'accord, entrainant un écart inférieur à 10 cm sur la distance maximale de détection

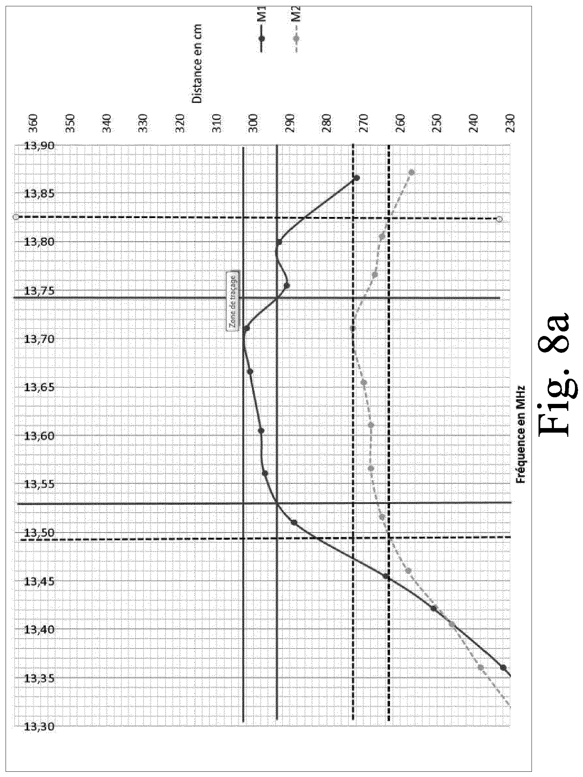

La figure 8a illustre les courbes de distances maximales de lecture en fonction de la fréquence pour les modes de réalisation M1 et M2.

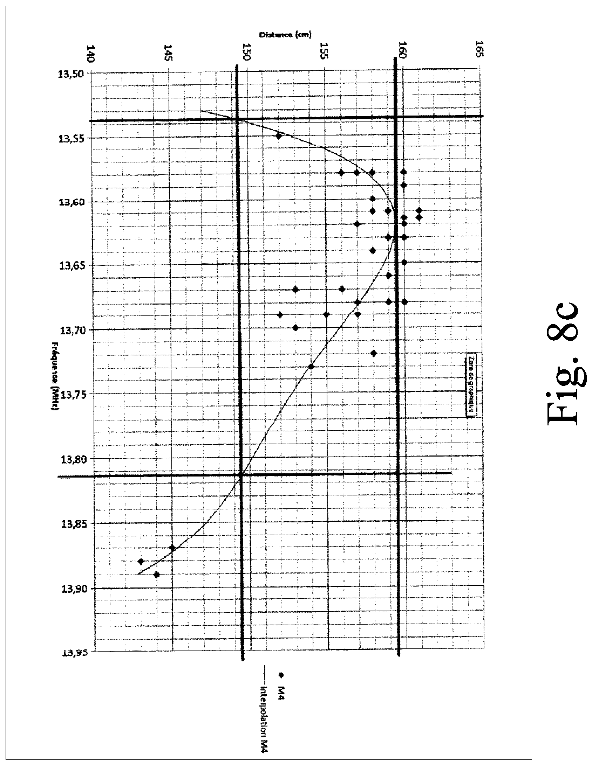

La figure 8c illustre la courbe des distances maximales de lecture en fonction de la fréquence pour le mode de réalisation M4.

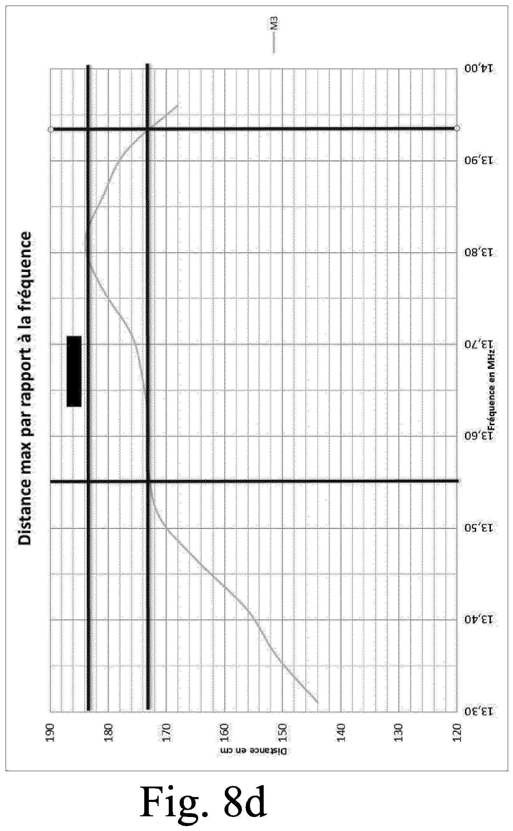

La figure 8d illustre la courbe des distances maximales de lecture en fonction de la fréquence pour le mode de réalisation M3.

La figure 8b illustre des mesures effectuées de décalages en fréquence en fonction des variations de températures.

La figure 9 illustre le schéma de principe de la solution préconisée par la demande de brevet WO 2011157941 précitée

**Description d'un mode de réalisation préféré**

L'on va considérer à présent un mode de réalisation particulier d'un transpondeur RFID destiné à la réalisation d'une étiquette RFID pour une conduite ou canalisation destinée à être enfouie sous terre. On considère typiquement l'exemple d'un tube PEHD (Polyéthylène Haute Densité), propre à la réalisation d'une canalisation pour l'adduction d'eau potable, la distribution du gaz, l'assainissement, la protection de câble électrique et de fibre optique. L'on pourra considérer en particulier l'exemple d'un tube multicouche en polyéthylène pour conduites enterrées en pression, constitué par un tube en polyéthylène à haute densité PE 80 ou PE 100 répondant à la norme EN1555. Plus spécifiquement, l'étiquette RFID servira à transmettre des informations relatives à l'identité, des caractéristiques de fabrication du tube, et de la localisation du tube.

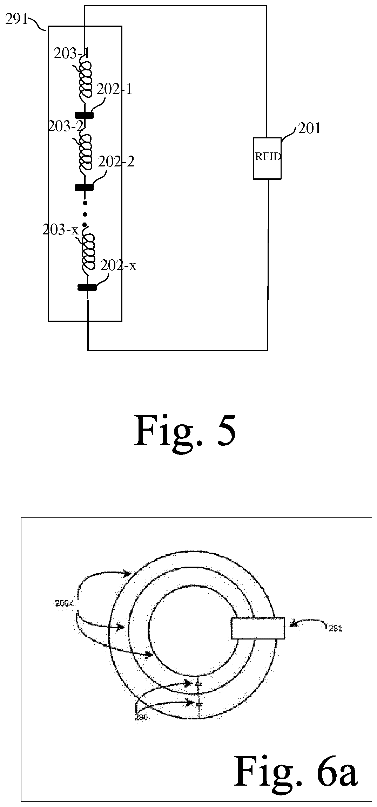

Comme cela est représenté dans la figure 5, illustrant le schéma électrique d'un mode de réalisation selon l'invention, le transpondeur RFID consiste en un système résonant, comportant une antenne 291, constitué d'une mise en série d'éléments d'antennes 203-1, 203-2, ... 203-x, de capacités 202-1, 202-2 ... 202-x, mis en série avec une puce RFID 201 conventionnelle. La puce RFID est un circuit intégré adaptée pour la mise en œuvre des techniques de communication sans fil et d'identification sans contact désignées sous l'appellation RFID. Une telle puce RFID est bien connue d'un homme du métier et, dans un souci de concision, ne sera pas décrite plus avant.

Dans le mode de réalisation illustré dans la figure 5, chaque extrémité d'un *élément d'antenne* est raccordée soit à une capacité 202-1, 202-2, ... 202-x, soit à une électrode de la puce RFID 201.

D'une manière générale, chaque élément d'antenne se compose d'un ou plusieurs éléments conducteurs physiques individualisés - ou *segments d'antenne* désignés par la référence générique 200x (non représentés dans la figure 5), dont chacun est constitué d'au moins une fraction notable de spire constituant l'élément de captation. Un premier segment d'antenne pourra être, par exemple, constitué d'une demi-spire. Un second segment d'antenne pourra être constitué d'une spire entière. Un troisième segment d'antenne pourra se composer d'une spire et demi. Un quatrième de deux spires etc...

Ainsi, les *éléments d'antenne* 203-1, ... 203-x pourront prendre des configurations diverses et variées, basées sur de multiples combinaisons de *segments d'antennes* 200x.

D'une manière générale, chaque *segment d'antenne* 200x est constitué d'un conducteur électrique, isolé ou non, disposé au sein d'un câble multibrin ou monobrin, sans restriction de section. Chaque segment d'antenne 200x peut différer d'un autre dans un même mode de réalisation, tant par la géométrie que par le nombre de spires, autorisant ainsi de grandes possibilités de variation dans la conception de l'étiquette RFID.

En ce qui concerne les capacités 202-1, 202-2, ... 202-x représentées dans la figure 5, il est à noter que celles-ci peuvent prendre des formes bien diverses. En particulier, une capacité 202-x n'est pas forcément restreinte à un seul élément, mais peut se concevoir comme une mise en série et/ou parallèle de plusieurs capacités individuelles, formant selon les règles de l'art l'équivalent d'une capacité unique. De la même manière, l'on notera que les capacités 202-1, 202-2, ..., 202-x pourront être de valeur différente.

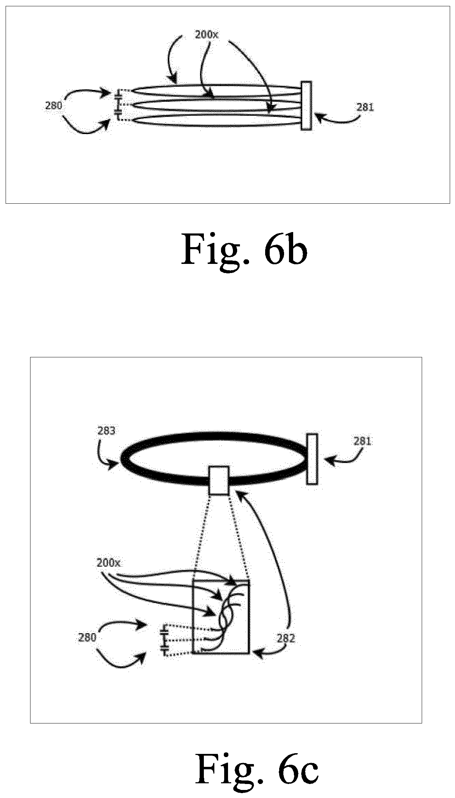

Les *segments d'antennes* 200x composant les *éléments d'antenne* 203-1, ..., 203-x, peuvent être agencés sur un support suivant différents modes de réalisation, comme cela est illustré dans les figures 6a, 6b et 6c.

Plus spécifiquement, la figure 6a illustre une première topologie de disposition des *segments d'antenne* 200x basée sur une imbrication concentrique de trois segments d'antennes 200x électriquement connectés à un circuit imprimé 281. Dans cette configuration, les trois segments d'antenne présentent une forme circulaire, disposés au sein d'un même plan, et sont disposés de manière très proche. Deux segments d'antenne immédiatement voisins sont situés à une distance inférieure à 3mm et de préférence 1mm pour permettre l'apparition de capacité de couplage 280 illustrées dans la figure 6a.

Une seconde topologie est illustrée dans la figure 6b où l'on voit la superposition dans l'axe perpendiculaire à la surface des différents *segments d'antennes,* par exemple trois *segments d'antenne.* Comme précédemment, les trois *segments d'antenne,* électriquement connectés au circuit imprimé ou connecteur 281, sont disposés de manière très proche, à une distance inférieure à 1mm de préférence, pour permettre l'apparition des capacités de couplage également représentées, dans la figure 6b, par la référence 280.

Enfin, la figure 6c illustre une troisième topologie dans laquelle on vient torsader les différents *segments d'antennes* 200x constitutifs des *éléments d'antennes* 203-1... 203-x entre eux pour former une torsade 282 qui éventuellement peut être surmoulé pour former une gaine unique 283 connecté à un circuit imprimé ou connecteur 281. Dans cette configuration, c'est le fait de torsader les différents *segments d'antenne* constitutifs des *éléments d'antenne* qui permet de faire apparaitre des capacités de couplage dont l'intérêt apparaîtra, avec force, dans l'exposé qui va suivre ci-après.

Les topologies illustrées dans les figures 6a, 6b et 6c ne sont que des exemples illustratifs des multiples possibilités de topologies envisageables pour réaliser une étiquette RFID conforme à la présente invention. D'une manière générale, un homme du métier pour concevoir une combinaison des différentes topologies illustrées, comme par exemple deux groupes distincts de segments d'antennes de 3 spires, chacun réalisé suivant la topologie de la figure 6c, et les deux groupes étant par la suite assemblée suivant la topologie de la figure 6b.

Clairement, il n'y a pas de limites dans les possibilités de combinaison des différentes topologies illustrées.

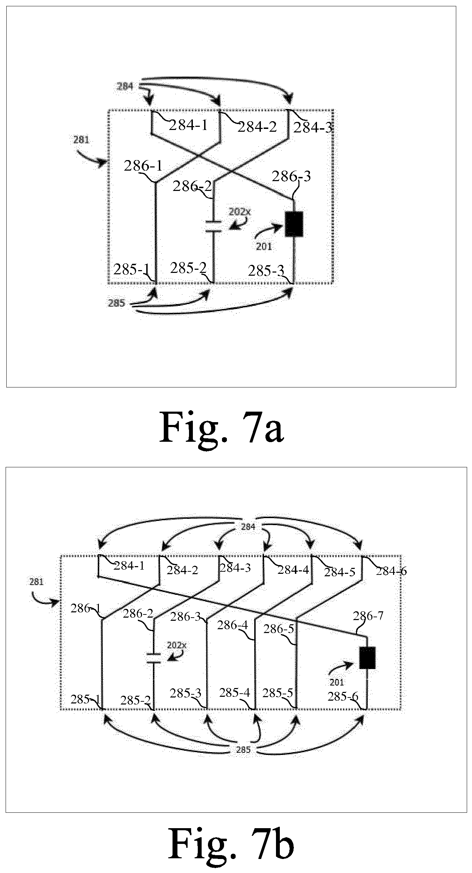

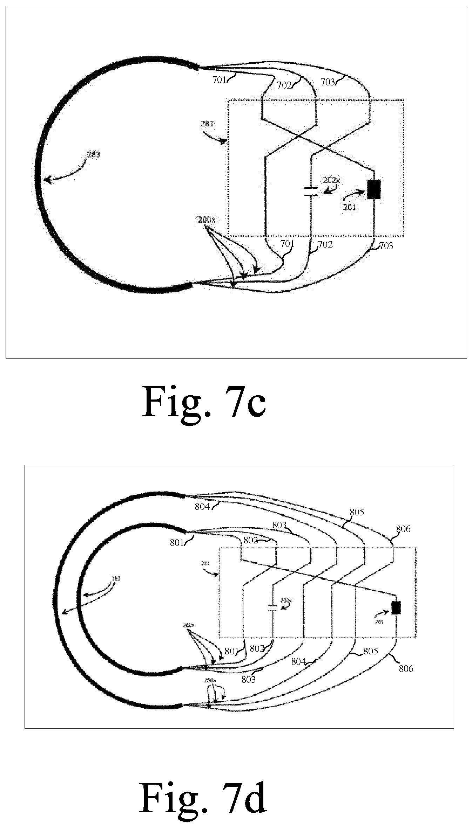

L'on décrit à présent, en référence aux figures 7a, 7b, 7c et 7d, de manière plus particulière le connecteur 281 permettant le raccordement électrique des segments d'antennes à l'élément oscillant du transpondeur RFID.

D'une manière générale, le connecteur 281 est réalisé pour permettre le raccordement électrique des différents *segments d'antenne,* les uns aux autres mais également au(x) capacité(s) 202-1, 202-2, ...202x, et à la puce RFID 201, afin de réaliser l'élément résonnant dont le schéma électrique est représenté dans la figure 5.

Dans sa forme la plus simple, le connecteur pourra se présenter sous la forme d'un circuit intégré sur lequel est disposé, la puce RFID 201, et le ou les différentes capacités 202-1, 202-2, ...202x.

Dans un souci de simplicité, l'on a représenté, dans les modes de réalisation des figures 7a-7d, une unique capacité 202x associée à une puce RFID, en sorte que les figures 7a-7d représentent, suivant le schéma de la figure 5, un ensemble de deux *éléments d'antenne* (deux coupures dans la connexion série, une pour la puce RFID et une pour la capacité 202x).

Les différents *segments d'antenne* sont électriquement connectés via des électrodes 284 et 285, qui pourront être en nombre quelconque.

Par exemple, le connecteur 281 de la figure 7a prend la forme d'un circuit imprimé comportant un ensemble de trois électrodes d'entrées, respectivement 284-1, 284-2, 284-3 et trois électrodes de sortie 285-1, 285-2 et 285-3 pour la connexion respective de trois segments d'antenne 701, 702, 703 constitutifs de l'antenne 291 .

Le circuit imprimé/connecteur comporte:

- une première électrode d'entrée 284-1, une seconde électrode d'entrée 284-2 et une troisième électrode d'entrée 284-3 qui permettent la connexion d'une première extrémité du premier segment 701, du second segment 702 et du troisième segment d'antenne 703, respectivement;
- une quatrième électrode de sortie 285-1, une cinquième électrode de sortie 285-2 et une sixième électrode de sortie 285-3 qui permettent la connexion d'une seconde extrémité du premier segment d'antenne 701, du second segment d'antenne 702 et du troisième segment d'antenne 703.

Le circuit imprimé comporte en outre:

- un premier circuit 286-3 permettant le raccordement de la première électrode d'entrée 284-1 à la sixième électrode de sortie 285-3 via une puce RFID;
- un second circuit 286-1 permettant le raccordement de la seconde électrode d'entrée 284-2 à la quatrième électrode de sortie 285-1 ;
- un troisième circuit 286-2 permettant le raccordement de la troisième électrode d'entrée 284-3 à la cinquième électrode de sortie 285-2 via la capacité 202x .

Dans un mode de réalisation préféré qui est illustré dans le schéma de la figure 7c, les premier, second et troisième segments d'antenne 701, 702, 703 sont intégrés au sein d'un même câble électrique à trois conducteurs permettant de générer une capacité répartie entre lesdits segments d'antenne.

En référence à la figure 7b, on décrit à présent un second mode de réalisation d'un circuit imprimé comportant un connecteur 281 permettant le raccordement de six segments d'antennes 801, 802, 803, 804, 805 et 806.

Plus spécifiquement, le circuit imprimé comporte une première électrode d'entrée 284-1, une seconde électrode d'entrée 284-2, une troisième électrode d'entrée 284-3, une quatrième électrode d'entrée 284-4, une cinquième électrode d'entrée 284-5 et une sixième électrode d'entrée 284-6 permettant la connexion d'une première extrémité d'un premier segment d'antenne 801, d'un second segment d'antenne 802, d'un troisième segment d'antenne 803, d'un quatrième segment d'antenne 804, d'un cinquième segment d'antenne 805 et d'un sixième segment d'antenne 806, respectivement.

Le circuit imprimé comporte en outre une septième électrode de sortie 285-1, une huitième électrode de sortie 285-2, une neuvième électrode de sortie 285-3, une dixième électrode de sortie 285-4, une onzième électrode de sortie 285-5 et une douzième électrode de sortie 285-6 permettant la connexion d'une seconde extrémité du premier segment d'antenne 801, du second segment d'antenne 802, du troisième segment d'antenne 803, du quatrième segment d'antenne 804, du cinquième segment d'antenne 805 et du sixième segment d'antenne 806, respectivement.

Le circuit imprimé de la figure 7b comporte :

- un premier circuit 286-7 permettant le raccordement de la première électrode d'entrée 284-1 à la douzième électrode de sortie 285-6 via une puce RFID;
- un second circuit 286-1 permettant le raccordement de la seconde électrode d'entrée 284-2 à la septième électrode de sortie 285-1 ;
- un troisième circuit 286-2 permettant le raccordement de la troisième électrode d'entrée 284-3 à la huitième électrode de sortie 285-2 via la capacité 202x;
- un quatrième circuit 286-3 permettant le raccordement de la quatrième électrode d'entrée 284-4 à la neuvième électrode de sortie 285-3;
- un cinquième circuit 286-4 permettant le raccordement de la cinquième électrode d'entrée 284-5 à la dixième électrode de sortie 285-4 ;
- un sixième circuit 286-5 permettant le raccordement de la sixième électrode d'entrée 284-6 à la onzième électrode de sortie 285-5.

De préférence, **les** premier, second et troisième segments d'antenne 801, 802 et 803 sont intégrés au sein d'un premier câble électrique à trois conducteurs et les quatrième, cinquième et sixième segments d'antenne 804, 805 et 806 sont intégrés au sein d'un second câble électrique à trois conducteurs, comme cela est illustré dans le mode de réalisation de la figure 7d.

L'agencement des segments d'antennes (200x) mis en œuvre dans un des modes réalisation (fig. 6a, 6b et 6c), ou un mélange de ceux-ci, fait qu'il existe un couplage capacitif (280) entre chaque conducteur (segment d'antenne) (200x), plus ou moins important suivant les modes de réalisation. Les capacités réparties (280) sont créées soit naturellement par la proximité de conducteurs électrique, soit par l'implémentation effective de capacités, De plus, la présence d'une enveloppe extérieure (surmoulage) (283) peut encore augmenter la valeur de cette capacité répartie. C'est ce couplage capacitif qui assure une immunité assez forte aux contraintes de dispersion, aussi bien qu'aux influences dispersives des milieux extérieurs.

La structure des antennes est déterminée de sorte que les conducteurs soient espacés de 1 à 3 mm. Dans un de nos modes de réalisation, les conducteurs sont surmoulés 3 par 3 brins avec un composant ayant un $\varepsilon_r \cong 5$. Ceci nous donne une capacité linéique (280) entre chacun des 3 brins pris 2 à 2 d'une valeur comprise entre 50 et 75 pF/m.

## Fonctionnement et adaptation de la fréquence de résonnance, résistance aux tolérances et aux variations

La pluralité des segments d'antennes 200x forme la surface de captation, cette surface doit être suffisante pour répondre au besoin de l'alimentation en puissance de la puce RFID 201. Le nombre total de spires issu de la pluralité des segments d'antennes est tel que la tension aux bornes de la puces RFID 201 soit suffisante pour l'activer.

L'accord en fréquence est le résultat en premier lieu de la mise en série d'une part de l'inductance de l'antenne globale (pluralité des 200x) et d'autres par la pluralité des capacités 202x mises en série.

Toutefois les capacités reparties 280, bien qu'ayant un impact faible sur la fréquence de résonnance, joue toutefois un rôle dans le calcul de la capacité d'accord.

Mais le vrai rôle de ces capacités réparties 280 est, d'une part, d'atténuer l'influence des capacités parasites introduites par l'environnement extérieure, et d'autre part, de permettre un élargissement de la tolérance sur la fréquence d'accord tel que l'indiquent les tests réalisés.

Sur quelques exemples de réalisation nous allons regarder quelle plage de fréquence d'accord nous garantit une diminution de moins de 10 cm de la distance maximale de lecture par rapport au maximum maximorum. Un test concerne le mode de réalisation réalisé suivant l'enseignement des demandes de brevet WO 2011157941 et US 2009/0027208 precitées, un autre test concerne une réalisation (M1) dont le mode de réalisation s'approche de l'invention, mais dont l'écart entre spires est volontairement établi à un valeur plus importante que préconisée (10 mm) , tandis que deux autres réalisations (M2, M3) sont relatives à l'invention.

Description des réalisations de test

Tag M1 : Mode de réalisation proche de la figure 7c, mais avec un inter spire de 10 mm (donc avec une capacité répartie très faible), pour une surface de 702 cm2. Avec la réalisation M1 nous obtenons : $f_{M1,min}$ = 13.530 *MHz* et $f_{M1,max}$ = 13.740 *MHz,* soit $\Delta_{M1}$ = 210 *kHz*

Tag M2 : Mode de réalisation suivant la figure 7c, constitué d'un câble tri-conducteurs, pour une surface de 702 cm2, l'on obtient :

$f_{M2,min}$ = 13.495 *MHz* et $f_{M2,max}$ = 13.825 *MHz,* soit $\Delta_{M2}$ = 330 *kHz*

Ce qui représente une amélioration de 50% de la bande de tolérance entre M1 et M2.

Tag M4 : Mode de réalisation suivant les technologies des brevets WO 2011157941 et US 2009/0027208 précités, pour une surface de 132 cm2.

Il a été effectué une estimation de la largeur de la bande de tolérance (Fig.8c), et l'on obtient l'estimation :

$f_{M4,min}$ = 13.535 *MHz* et $f_{M4,max}$ = 13.810 *MHz,* soit $\Delta_{M4}$ = 275 *kHz*

Tag M3 : Mode de réalisation suivant la figure 7d, constitué de deux câbles tri-conducteurs, formant un total de deux groupes de 3 spires, pour une surface de 63 cm2.

La plage de tolérance a pu être déterminée, comme illustré en figure 8d : $f_{M3,min}$ = 13.550 *MHz* et $f_{M3,max}$ = 13.940 *MHz,* soit $\Delta_{M3}$ = 390 *kHz*

Ce qui représente une augmentation de plus de 40% de la bande de tolérance.

De plus, dans ce mode de réalisation (M3), la surface d'antenne est de 63 cm2, à comparer aux 132 cm2 de la solution permise par les demandes de brevet WO2011157941 et US 2009/0027208 précitées, pour une distance de détection supérieure de 20 cm (180 cm au lieu de 160 cm). Dans un mode de réalisation décrit précédemment, il a été obtenu, pour une surface de 19.6 cm2, une distance de lecture de 144 cm. A partir d'une courbe d'interpolation (calculée à partir de divers modes de réalisation), il a pu être estimé qu'une surface de 23.25 cm2 était nécessaire pour atteindre les 150 cm, soit 6 fois moins de surface que la solution préconisée par les demandes de brevet WO2011157941 et US 2009/0027208 précitées.

Comme on le constate, l'invention permet donc d'accroitre significativement la plage de tolérance de la fréquence d'accord pour un même écart de distance de lecture maximale, et en outre, de gagner en efficacité énergétique, puisqu'il nous faut moins de surface de captation par rapport à des tags existants pour une même distance maximale de détection.

On pourra également groupés les segments d'antenne par deux ou plus au sein d'un même câble conducteur à deux ou plus conducteurs, dans le but de faire apparaitre une capacité linéique entre chacun des segments d'antenne d'une valeur comprise entre 50 et 75 pF/m.

On pourra également prévoir un transpondeur comportant un circuit imprimé comportant un connecteur (281) permettant le raccordement de trois segments d'antennes 701, 702, 703.

Le transpondeur pourra comporter des moyens de communication de l'identité, ainsi que les caractéristiques de l'ouvrage enfoui (date d'enfouissement, nature de l'ouvrage, matière, ...).

Il pourra être configuré pour permettre l'identification d'une canalisation de distribution de fluide (ex : eau potable) ou de gaz, de protection de câble électrique ou de câble de fibre optique.

Il pourra être adapté pour être disposé dans un boitier autonome fixé sur le tube par clipsage, soudage ou serrage.

**Revendications**

1. Transpondeur pour un système de communication sans fil et d'identification sans contact, de type RFID, configuré pour être apposé sur un ouvrage destiné à être enfoui, ledit transpondeur comprenant:

   - un ensemble de segments d'antennes constitués de conducteurs électriques constituant au moins un premier et un second élément d'antenne (203-1, 203-2),
   - un connecteur (281) comportant une puce RFID et au moins une capacité d'accord (202x) ainsi que des moyens de couplage permettant le raccordement électrique desdits segments d'antennes;

   lesdits segments d'antenne étant disposés proches les uns des autres, à une distance inférieure à 3 mm et de préférence inférieure à 1 mm, de manière à permettre l'apparition de capacités de couplage; **caractérisé en ce qu'**il comporte un circuit imprimé comportant un connecteur (281) permettant le raccordement de trois segments d'antennes (701, 702, 703), ledit connecteur (281) comportant:

   - une première (284-1), une seconde (284-2) et une troisième électrode d'entrée (284-3) permettant la connexion d'une première extrémité d'un premier (701), d'un second (702) et d'un troisième (703) segment d'antenne, respectivement;
   - une quatrième (285-1), une cinquième (285-2) et une sixième (285-3) électrodes de sortie permettant la connexion d'une seconde extrémité dudit premier (701), dudit second (702) et dudit troisième (703) segment d'antenne;

   et **en ce que** ledit circuit imprimé comporte:

   - un premier circuit (286-3) permettant le raccordement de la première électrode d'entrée (284-1) à la sixième électrode de sortie (285-3) via une puce RFID;
- un second circuit (286-1) permettant le raccordement de la seconde électrode d'entrée (284-2) à la quatrième électrode de sortie (285-1);
- un troisième circuit (286-2) permettant le raccordement de la troisième électrode d'entrée (284-3) à la cinquième électrode de sortie (285-2) via une capacité (202x).

2. Transpondeur selon la revendication 1 **caractérisé en ce que** les segments d'antenne sont disposés dans un même plan, de manière concentrique, et électriquement connectés audit connecteur (281), dans lequel deux segments d'antenne immédiatement voisins sont disposés à une distance inférieure à 3 mm, et de préférence 1mm permettant l'apparition de capacités de couplage.

3. Transpondeur selon la revendication 1 **caractérisé en ce que** les segments d'antenne présentent des plans superposés les uns sur les autres, dans lequel deux segment d'antenne immédiatement voisins sont situés à une distance inférieure à 3mm et de préférence inférieure à 1 mm..

4. Transpondeur selon la revendication 1 **caractérisé en ce que** les segments d'antenne sont disposés entre eux pour former une torsade (282).

5. Transpondeur selon la revendication 1 **caractérisé en ce que** lesdits segments d'antenne sont groupés par deux ou plus au sein d'un même câble conducteur à deux ou plus conducteurs, dans le but de faire apparaitre une capacité linéique entre chacun des segments d'antenne d'une valeur comprise entre 50 et 75 pF/m.

6. Transpondeur selon la revendication 5, **caractérisé en ce que** lesdits premier, second et troisième segments d'antenne (701, 702, 703) sont intégrés au sein d'un même câble tri-conducteur permettant de générer une capacité répartie entre lesdits segments d'antenne.

7. Transpondeur pour un système de communication sans fil et d'identification sans contact, de type RFID, configuré pour être apposé sur un ouvrage destiné à être enfoui, ledit transpondeur comprenant:

   - un ensemble de segments d'antennes constitués de conducteurs électriques constituant au moins un premier et un second élément d'antenne (203-1, 203-2),
   - un connecteur (281) comportant une puce RFID et au moins une capacité d'accord (202x) ainsi que des électrodes permettant le raccordement électrique desdits segments d'antennes;

lesdits segments d'antenne étant disposés proches les uns des autres, à une distance inférieure à 3 mm et de préférence inférieure à 1 mm, de manière à permettre l'apparition de capacités de couplage; **caractérisé en ce qu'**il comporte un circuit imprimé comportant un connecteur (281) permettant le raccordement de six segments d'antennes (801, 802, 803, 804, 805, 806), ledit connecteur (281) comportant:

   - une première (284-1), une seconde (284-2), une troisième (284-3), une quatrième (284-4), une cinquième (284-5) et une sixième électrode d'entrée (284-6) permettant la connexion d'une première extrémité d'un premier (801), d'un second (802), d'un troisième (803), d'un quatrième (804), d'un cinquième (805) et d'un sixième (806) segment d'antenne, respectivement;
   - une septième (285-1), une huitième (285-2), une neuvième (285-3), une dixième (285-4), une onzième (285-5) et une douzième électrode (285-6) de sortie permettant la connexion d'une seconde extrémité dudit premier (801), dudit second (802), dudit troisième (803), dudit quatrième (804), dudit cinquième (805) et dudit sixième (806) segment d'antenne, respectivement;

et **en ce que** ledit circuit imprimé comporte:

   - un premier circuit (286-7) permettant le raccordement de la première électrode d'entrée (284-1) à la douzième électrode de sortie (285-6) via une puce RFID;
   - un second circuit (286-1) permettant le raccordement de la seconde électrode d'entrée (284-2) à la septième électrode de sortie (285-1);
   - un troisième circuit (286-2) permettant le raccordement de la troisième électrode d'entrée (284-3) à la huitième électrode de sortie (285-2) via une capacité (202x).
   - un quatrième circuit (286-3) permettant le raccordement de la quatrième électrode d'entrée (284-4) à la neuvième électrode de sortie (285-3);
   - un cinquième circuit (286-4) permettant le raccordement de la cinquième électrode d'entrée (284-5) à la dixième électrode de sortie (285-4);
   - un sixième circuit (286-5) permettant le raccordement de la sixième électrode d'entrée (284-6) à la onzième électrode de sortie (285-5).

8. Transpondeur selon la revendication 7, **caractérisé en ce que** lesdits premier, second et troisième segments d'antenne (801, 802, 803) sont intégrés au sein d'un premier câble électrique à trois conducteurs et **en ce que** lesdits quatrième, cinquième et sixième segments d'antenne (804, 805, 806) sont intégrés au sein d'un second câble électrique à trois conducteurs

9. Transpondeur selon l'une des revendications précédentes, **caractérisé en ce qu'**il comporte des moyens de communication de l'identité, ainsi que les caractéristiques de l'ouvrage enfoui (date d'enfouissement, nature de l'ouvrage, matière, ...).

10. Transpondeur selon l'une des revendications précédentes, **caractérisé en ce qu'**il est configuré pour permettre l'identification d'une canalisation de distribution de fluide (ex : eau potable) ou de gaz, de protection de câble électrique ou de câble de fibre optique.

11. Transpondeur selon l'une des revendications précédentes **caractérisé en ce qu'**il est adapté pour être disposé dans un boitier autonome fixé sur le tube par clipsage, soudage ou serrage.

**Patentansprüche**

1. Transponder für ein drahtloses Kommunikations- und kontaktloses Identifizierungssystem des Typs RFID, der konfiguriert ist, um an einer Struktur angebracht zu werden, die dazu bestimmt ist, vergraben zu werden, wobei der Transponder umfasst:

   - eine Gruppe von Antennensegmenten, die aus elektrischen Drähten bestehen, die mindestens ein erstes und ein zweites Antennenelement bilden (203-1, 203-2),
   - einen Verbinder (281), der einen RFID-Chip und mindestens eine Abstimmkapazität (202x) sowie Kopplungsmittel umfasst, die die elektrische Kopplung der Antennensegmente ermöglichen;

   wobei die genannten Antennensegmente nahe beieinander in einem Abstand von weniger als 3 mm, vorzugsweise weniger als 1 mm, angeordnet sind, um das Auftreten von Koppelkapazitäten zu ermöglichen;
   **dadurch gekennzeichnet, dass** sie ferner eine gedruckte Schaltung umfasst, die einen Verbinder (281) zum Verbinden von drei Antennensegmenten (701, 702, 703) aufweist, wobei der Verbinder (281) umfasst:

   - eine erste (284-1), eine zweite (284-2) und eine dritte Eingangselektrode (284-3) zum Verbinden eines ersten Endes eines ersten (701), eines zweiten (702) bzw. eines zweiten (702) und eines dritten (703) Antennensegments;
   - eine vierte (285-1), eine fünfte (285-2) und eine sechste (285-3) Ausgangselektrode zum Verbinden eines zweiten Endes des ersten (701), des zweiten (702) und des dritten (703) Antennensegments;

   und dass die gedruckte Schaltung umfasst:

   - eine erste Schaltung (286-3) zur Verbindung der ersten Eingangselektrode (284-1) mit der sechsten Ausgangselektrode (285-3) über einen RFID-Chip;
   - eine zweite Schaltung (286-1) zum Verbinden der zweiten Eingangselektrode (284-2) mit der vierten Ausgangselektrode (285-1);
   - eine dritte Schaltung (286-2) zum Verbinden der dritten Eingangselektrode (284-3) mit der fünften Ausgangselektrode (285-2) über einen Kondensator (202x).

2. Transponder nach Anspruch 1, **dadurch gekennzeichnet, dass** die Antennensegmente in einer gleichen Ebene, konzentrisch angeordnet und elektrisch mit dem Verbinder (281) verbunden sind, wobei zwei unmittelbar benachbarte Antennensegmente in einem Abstand von weniger als 3 mm, vorzugsweise 1 mm, angeordnet sind, um das Auftreten von Koppelkondensatoren zu ermöglichen.

3. Transponder nach Anspruch 1, **dadurch gekennzeichnet, dass** die Antennensegmente übereinander liegende Ebenen aufweisen, in denen zwei unmittelbar benachbarte Antennensegmente in einem Abstand von weniger als 3 mm, vorzugsweise weniger als 1 mm, angeordnet sind.

4. Transponder nach Anspruch 1, **dadurch gekennzeichnet, dass** die Antennensegmente so angeordnet sind, dass sie eine verdrillte Struktur (282) bilden.

5. Transponder nach Anspruch 1, **dadurch gekennzeichnet, dass** die Antennensegmente durch zwei oder mehr innerhalb desselben Leiterkabels mit zwei oder mehr Leitern gruppiert sind, um eine lineare Kapazität zwischen jedem der Antennensegmente zwischen 50 und 75 pF/m aufzuweisen.

6. Transponder nach Anspruch 5, **dadurch gekennzeichnet, dass** die ersten, zweiten und dritten Antennensegmente (701, 702, 703) in ein und dasselbe dreidrähtige Kabel eingebettet sind, was die Erzeugung einer Kapazität ermöglicht, die zwischen den Antennensegmenten verteilt ist.

7. Transponder für ein drahtloses Kommunikations- und kontaktloses Identifizierungssystem des Typs RFID, der so konfiguriert ist, dass er an einer Struktur angebracht werden kann, die dazu bestimmt ist, vergraben zu werden, wobei der Transponder umfasst:

- eine Gruppe von Antennensegmenten, die aus elektrischen Drähten bestehen, die mindestens ein erstes und ein zweites Antennenelement bilden (203-1, 203-2),
- einen Verbinder (281), der einen RFID-Chip und mindestens eine Abstimmkapazität (202x) sowie Kopplungsmittel umfasst, die die elektrische Kopplung der Antennensegmente ermöglichen;

wobei die genannten Antennensegmente nahe beieinander in einem Abstand von weniger als 3 mm, vorzugsweise weniger als 1 mm, angeordnet sind, um das Auftreten von Koppelkapazitäten zu ermöglichen;

**dadurch gekennzeichnet, dass** sie ferner eine gedruckte Schaltung umfasst, die einen Verbinder (281) zum Verbinden von sechs Antennensegmenten (801, 802, 803, 804, 805, 806) umfasst, wobei der Verbinder (281) umfasst:

- eine erste (284-1), eine zweite (284-2), eine dritte (284-3), eine vierte (284-4), eine fünfte (285-5) und eine sechste Eingangselektrode (284-6) zum Verbinden eines ersten Endes eines ersten (801), eines zweiten (802), eines dritten (803), eines vierten (804), eines fünften (805) bzw. eines sechsten (806) Antennensegments;
- eine siebte (285-1), eine achte (285-2), eine neunte (285-3), eine zehnte (285-4), eine elfte (285-5) und eine zwölfte Ausgangselektrode (285-6) zum Verbinden eines zweiten Endes des ersten (801), des zweiten (802), des dritten (803), des vierten (804), des fünften (805) bzw. des sechsten (806) Antennensegments;

und dass die besagte gedruckte Schaltung umfasst:

- eine erste Schaltung (286-7) zur Verbindung der ersten Eingangselektrode (284-1) mit der zwölften Ausgangselektrode (285-6) über einen RFID-Chip;
- eine zweite Schaltung (286-1) zum Verbinden der zweiten Eingangselektrode (284-2) mit der siebten Ausgangselektrode (285-1);
- eine dritte Schaltung (286-2) zum Verbinden der dritten Eingangselektrode (284-3) mit der achten Ausgangselektrode (285-2) über einen Kondensator (202x);
- eine vierte Schaltung (286-3) zum Verbinden der vierten Eingangselektrode (284-4) mit der neunten Ausgangselektrode (285-3);
- eine fünfte Schaltung (286-4) zum Verbinden der fünften Eingangselektrode (284-5) mit der zehnten Ausgangselektrode (285-4);
- eine sechste Schaltung (286-5) zum Verbinden der sechsten Eingangselektrode (284-6) mit der elften Ausgangselektrode (285-5).

8. Transponder nach Anspruch 7, **dadurch gekennzeichnet, dass** das erste, das zweite und das dritte Antennensegment (801, 802, 803) in einem ersten elektrischen Dreidrahtkabel integriert sind und dass das vierte, das fünfte und das sechste Antennensegment (804, 805, 806) in einem zweiten elektrischen Dreidrahtkabel integriert sind.

9. Transponder nach einem der vorhergehenden Ansprüche, **dadurch gekennzeichnet, dass** er Mittel zur Kommunikation der Identität, sowie die Merkmale der vergrabenen Struktur (Datum der Bestattung, Art der Arbeit, Material, ...) umfasst.

10. Transponder nach einem der vorstehenden Ansprüche, **dadurch gekennzeichnet, dass** er so konfiguriert ist, dass er die Identifizierung eines Flüssigkeitsverteilungsrohres (z.B. Trinkwasser) oder Gas, eines elektrischen Kabelschutzes oder eines optischen Faserkabels ermöglicht.

11. Transponder nach einem der vorstehenden Ansprüche, **dadurch gekennzeichnet, dass** er in einem autonomen Gehäuse angeordnet werden kann, das durch Clipsen, Schweißen oder Klemmen am Rohr befestigt ist.

**Claims**

1. A transponder for a wireless communication and contactless identification system, of the type RFID, configured to be affixed to a structure intended to be buried, said transponder comprising:

- a set of antenna segments consisting of electrical wires constituting at least a first and a second antenna element (203-1, 203-2),
- a connector (281) comprising a RFID chip and at least one tuning capacitance (202x) as well as coupling means allowing the electrical coupling of said antenna segments;

the said antenna segments being arranged close to each other, at a distance of less than 3 mm and preferably less than 1 mm, so as to allow the appearance of coupling capacities;
**characterized in that** it further includes a printed circuit comprising a connector (281) for connecting three antenna segments (701, 702, 703), said connector (281) comprising:

- a first (284-1), a second (284-2) and a third input electrode (284-3) for connecting a first end of a first (701), a second (702) and a second (702) a third (703) antenna segment, respectively;
- a fourth (285-1), a fifth (285-2) and a sixth (285-3) output electrode for connecting a second end of said first (701), said second (702) and said third (703) antenna segment;

and **in that** said printed circuit board comprises:

- a first circuit (286-3) for connecting the first input electrode (284-1) to the sixth output electrode (285-3) via an RFID chip;
- a second circuit (286-1) for connecting the second input electrode (284-2) to the fourth output electrode (285-1);
- a third circuit (286-2) for connecting the third input electrode (284-3) to the fifth output electrode (285-2) via a capacitor (202x).

2. The transponder according to claim 1, **characterized in that** the antenna segments are arranged in a same plane, concentrically, and electrically connected to said connector (281), wherein two immediately adjacent antenna segments are arranged at a distance less than 3 mm, and preferably 1 mm, so as to allow the appearance of coupling capacitors.

3. The transponder according to claim 1 **characterized in that** the antenna segments have planes superimposed on each other, in which two immediately adjacent antenna segments are situated at a distance of less than 3 mm and preferably less than 1 mm.

4. The transponder according to claim 1 **characterized in that** the antenna segments are arranged in order to form a twist (282).

5. The transponder according to claim 1 **characterized in that** said antenna segments are grouped by two or more within the same conductor cable with two or more conductors, in order to show a linear capacitance between each of the antenna segments between 50 and 75 pF/m.

6. The transponder according to claim 5, **characterized in that** said first, second and third antenna segments (701, 702, 703) are embedded into a same three-wire cable allowing the generation of a capacitance being distributed between said antenna segments.

7. A transponder for a wireless communication and contactless identification system, of the type RFID, configured to be affixed to a structure intended to be buried, said transponder comprising:

- a set of antenna segments consisting of electrical wires constituting at least a first and a second antenna element (203-1, 203-2),
- a connector (281) comprising a RFID chip and at least one tuning capacitance (202x) as well as coupling means allowing the electrical coupling of said antenna segments;

the said antenna segments being arranged close to each other, at a distance of less than 3 mm and preferably less than 1 mm, so as to allow the appearance of coupling capacities;
**characterized in that** it further includes a printed circuit board comprising a connector (281) for connecting six antenna segments (801, 802, 803, 804, 805, 806), said connector (281) comprising:

- a first (284-1), a second (284-2), a third (284-3), a fourth (284-4), a fifth (285-5) and a sixth input electrode (284-6) for connecting a first end of a first (801), a second (802), a third (803), a fourth (804), a fifth (805)) and a sixth (806) antenna segment, respectively;
- a seventh (285-1), an eighth (285-2), a ninth (285-3), a tenth (285-4), an eleventh (285-5) and a twelfth output electrode (285-6) electrode for connecting a second end of said first (801), said second (802), said third (803), said fourth (804), said fifth (805) and said sixth (806) antenna segments, respectively ;

and **in that** said printed circuit board comprises:

- a first circuit (286-7) for connecting the first input electrode (284-1) to the twelfth output electrode (285-6) via an RFID chip;
- a second circuit (286-1) for connecting the second input electrode (284-2) to the seventh output electrode (285-1);
- a third circuit (286-2) for connecting the third input electrode (284-3) to the eighth output electrode (285-2) via a capacitor (202x);
- a fourth circuit (286-3) for connecting the fourth input electrode (284-4) to the ninth output electrode (285-3);
- a fifth circuit (286-4) for connecting the fifth input electrode (284-5) to the tenth output electrode (285-4);
- a sixth circuit (286-5) for connecting the sixth input electrode (284-6) to the eleventh output electrode (285-5).

8. The transponder according to claim 7, **characterized in that** said first, said second and said third antenna segments (801, 802, 803) are integrated within a first three-wire electrical cable and **in that** said fourth, said fifth and said sixth antenna segments (804, 805, 806) are integrated within a second three-wire electrical cable

9. The transponder according to one of the preceding claims, **characterized in that** it comprises means of communication of the identity, as well as the characteristics of the buried structure (date of burial, nature of the work, material, ...).

10. The transponder according to one of the preceding claims, **characterized in that** it is configured to allow the identification of a fluid distribution tube (eg drinking water) or gas, electrical cable protection or fiber cable optical.

11. The transponder according to one of the preceding claims, **characterized in that** it is adapted to be arranged in an autonomous housing fixed to the tube by clipping, welding or clamping.

Fig. 1

Fig. 2

# Fig. 3

# Fig. 4

# Fig. 5

# Fig. 6a

# Fig. 6b

# Fig. 6c

Fig. 7a

Fig. 7b

Fig. 7c

Fig. 7d

Fig. 8a

Fig. 8b

Fig. 8c

Fig. 8d

Fig. 9

## RÉFÉRENCES CITÉES DANS LA DESCRIPTION

**Documents brevets cités dans la description**

- WO 2011157941 A
- WO 2012062471 A
- US 20090027208 A
- WO 2011157942 A
- US 20030231020 A